(19)

Europäisches
Patentamt
European
Patent Office
Office européen
des brevets

(11) **EP 2 779 768 A1**

(12) **EUROPEAN PATENT APPLICATION**
published in accordance with Art. 153(4) EPC

(43) Date of publication:
**17.09.2014 Bulletin 2014/38**

(21) Application number: **12848441.7**

(22) Date of filing: **06.09.2012**

(51) Int Cl.:
***H04W 72/04*** (2009.01)   ***H04W 72/12*** (2009.01)

(86) International application number:
**PCT/CN2012/081087**

(87) International publication number:
**WO 2013/067845 (16.05.2013 Gazette 2013/20)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.11.2011   CN 201110351917**

(71) Applicant: **China Academy of Telecommunications Technology Haidian District Beijing 100191 (CN)**

(72) Inventors:
• **ZHAO, Rui Beijing 100191 (CN)**
• **PAN, Xueming Beijing 100191 (CN)**
• **SHEN, Zukang Beijing 100191 (CN)**
• **ZHANG, Ranran Beijing 100191 (CN)**

(74) Representative: **Körfer, Thomas Mitscherlich PartmbB Patent- und Rechtsanwälte Sonnenstrasse 33 80331 München (DE)**

(54) **DOWNLINK CONTROL INFORMATION TRANSMISSION METHOD AND DEVICE**

(57)   Embodiments of the present disclosure provide a method for transmitting downlink control information to effectively support the two transmission modes of the E-PDCCH. The base station configures the localized E-PDCCH resource and the distributed E-PDCCH resource. The user terminal detects the DCI in the search space corresponding to the localized E-PDCCH resource and the search space corresponding to the distributed E-PDCCH resource, so as to obtain the downlink control information transmitted by the base station. Thus, the problem that the conventional technique lacks transmission and configuration solution for the localized and distributed transmission modes of the E-PDCCH is solved. The E-PDCCH obtains channel selective gain and diversity transmission gain.

EP 2 779 768 A1

```
┌─────────────────────────────────────────────────────────────┐
│  The base station configures for a user terminal a localized  │──── S501
│  E-PDCCH resource and a distributed E-PDCCH resource for      │
│  transmitting downlink control information                     │
└─────────────────────────────────────────────────────────────┘
                            │
                            ▼
┌─────────────────────────────────────────────────────────────┐
│  The base station transmits the downlink control information   │──── S502
│  to the user terminal via the localized E-PDCCH resource and   │
│  the distributed E-PDCCH resource                              │
└─────────────────────────────────────────────────────────────┘
```

FIG. 5

**Description**

This application claims the benefit and priority of Chinese Patent Application No. 201110351917.2, entitled "method and apparatus for transmitting downlink control information" filed November 8, 2011. The entire disclosure of which is incorporated herein by reference.

**FIELD OF THE DISCLOSURE**

The present disclosure relates to communications technique field, and more particularly, to a method and an apparatus for transmitting downlink control information.

**BACKGROUND OF THE DISCLOSURE**

In a long term evolution (LTE) system, physical downlink control channel (PDCCH) is transmitted in each radio subframe and is multiplexed with physical downlink shared channel (PDSCH) via a time division multiplexing (TDM) manner. The PDCCH is transmitted on first N orthogonal frequency division multiplexing (OFDM) symbols of one downlink subframe, wherein N may be 1, 2, 3 or 4, and N=4 is merely allowed in a system with bandwidth of 1.4MHz.

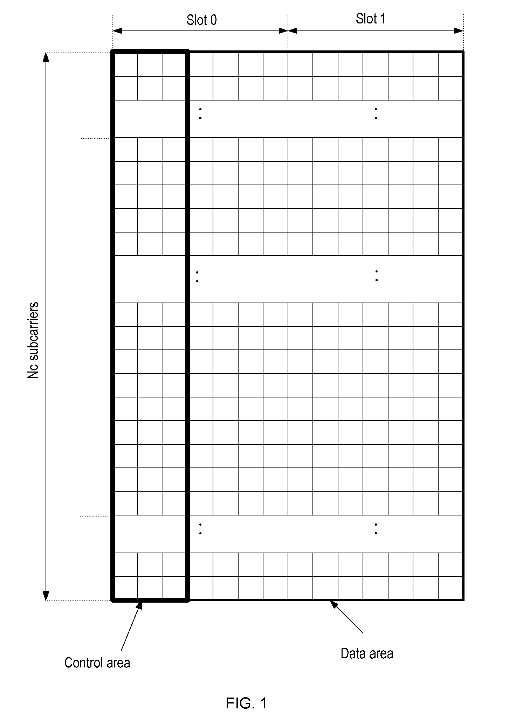

FIG. 1 is a schematic diagram illustrating multiplexing of a control area and a data area in a downlink subframe according to a conventional system.
In the LTE system, the control area used for transmitting the PDCCH consists of logically divided control channel elements (CCEs). The CCEs are mapped to resource elements (REs) in a full interleaving manner. The transmission of downlink control information (DCI) is also based on the CCEs. One DCI of one user equipment (UE, i.e., a terminal device) may be transmitted on N consecutive CCEs. In the LTE system, N may be 1, 2, 4, or 8 and is referred to as aggregation level. The UE performs a PDCCH blind detection in the control area, so as to determine whether there is PDCCH transmitted for it. As to the blind detection, the UE attempts to decode with respect to different DCI formats and CCE aggregation levels using a radio network temporary identity (RNTI) of the UE. If the decoding succeeds, the DCI with respect to the UE is received. An LTE UE needs to perform the blind detection on the control area in each downlink subframe in a discontinuous reception (DRX) status, so as to find the PDCCH.
The control area in the subframe of the LTE system consists of two spaces, i.e., a common search space (CSS) and a UE-specific search space (UESS). The CSS is mainly used for transmitting the DCI of scheduling cell specific control information (e.g., system information, paging information, multicast power control information, etc.). The UESS is mainly used for transmitting the DCI with respect to the resource scheduling of each UE. The CSS in each downlink subframe includes first 16 CCEs. In the CSS, merely CCE aggregation levels 4 and 8 are supported. An initial CCE of the UESS in each downlink subframe is relevant to a subframe number and the RNTI of the UE. CCE aggregation levels 1, 2, 4 and 8 are supported in the UESS. In the UESS, the blind detection of each aggregation level corresponds to one search space, i.e., the blind detections of different aggregation levels are performed by the UE in different search spaces. Table 1 shows CCE spaces in a downlink subframe on which the UE has to perform the blind detection.

Table 1 CCE spaces in a downlink subframe on which the UE has to perform the blind detection

| Search space $S_k^{(L)}$ | | | Number of PDCCH candidates $M^{(L)}$ |
|---|---|---|---|
| type | Aggregation level L | Size [in CCEs] | |
| UESS | 1 | 6 | 6 |
| | 2 | 12 | 6 |
| | 4 | 8 | 2 |
| | 8 | 16 | 2 |
| CSS | 4 | 16 | 4 |
| | 8 | 16 | 2 |

L denotes an aggregation level, size denotes the number of CCEs on which the blind detection needs to be performed corresponding to each aggregation level. $M^{(L)}$ denotes the number of blind detection attempts corresponding to each aggregation level.

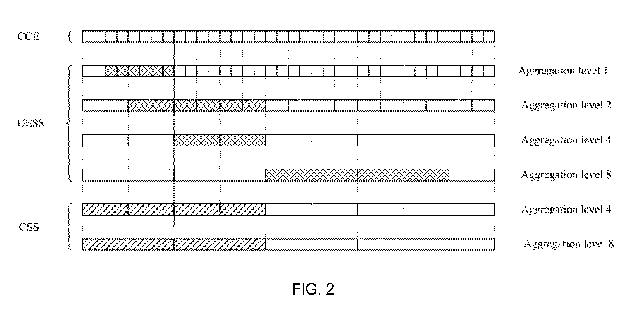

FIG. 2 is a schematic diagram illustrating a conventional blind detection procedure.

As shown in table 1, the UE makes attempts on 22 PDCCH channels in one downlink subframe, wherein CSS has 6 PDCCH channel resources and UESS has 16 PDCCH channel resources.

Due to the introduce of the techniques such as multiuser-multiple input multiple output (MU-MIMO), coordinative multi point (CoMP), carrier aggregation (CA) and configurations such as remote radio head (RRH) of IDs of the same cell and 8 antennas, the capacity and transmission efficiency of the physical downlink shared channel of the long term evolution advanced (LTE-A) system have been increased dramatically. But compared with earlier LTE releases (e.g., Rel-8/9), the physical downlink control channel of the LTE-A system does not benefit from the new techniques.

On the one hand, the application of the new techniques enables the PDSCH to provide data transmission for more users at the same time, which greatly enhances capacity requirement of the PDCCH. On the other hand, demodulation reference signal (DM-RS) applied in the PDSCH and R-PDCCH applied in relay backhaul provide technical support and experience for the improvement of the PDCCH.

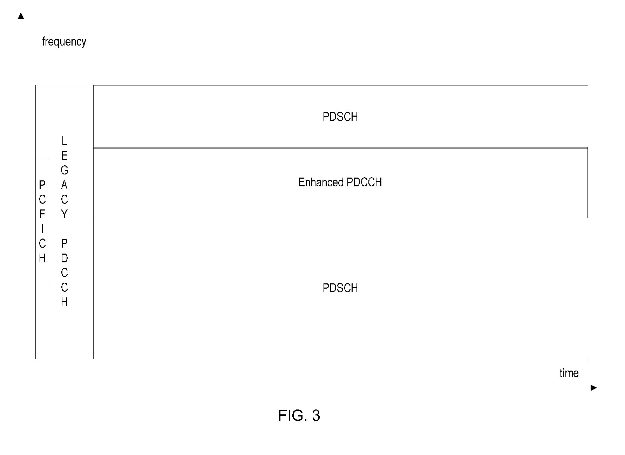

In order to increase the capacity of the downlink control channel and increase transmission efficiency of the downlink control information, one conventional solution includes: reserve original PDCCH domain, at the same time, transmit enhanced PDCCH in the PDSCH domain of the downlink subframe. In the original PDCCH domain, the existing transmission and receiving techniques are stilled adopted and the original PDCCH resources are utilized, e.g., adopting transmission diversity during transmission, detecting the DCI in the CSS and UESS using a blind detection technique according to a common reference signal (CRS) during reception, transmitting on first N OFDM symbols, wherein N=1, 2, 3 or 4 and N=4 is allowed in system with system bandwidth of 1.4MHz. This part of PDCCH domain is referred to as a legacy PDCCH domain. The enhanced PDCCH domain may use more advanced transmission and receiving techniques, e.g., pre-coding during transmission, detecting based on DM-RS during receiving, transmitting on time-frequency resources outside of the legacy PDCCH domain, using some resources of the original PDSCH and is multiplexed with the PDSCH via a frequency division manner. This part PDCCH domain is referred to as enhanced PDCCH (E-PDCCH) domain. The solution that the enhanced PDCCH and the PDSCH are multiplexed in the frequency division manner is referred to as FDM E-PDCCH, as shown in FIG. 3 which is a schematic diagram illustrating an enhanced PDCCH according to a convention system.

In current standards, it has been determined that the E-PDCCH needs to support two modes: beamforming transmission and diversity transmission, applied in different scenarios. Generally, the beamforming transmission mode is used in a scenario that the base station is able to obtain relative accurate channel information returned by the user terminal and adjacent cell interference does not fluctuate greatly in subframes. At this time, the base station selects continuous frequency resources with better quality according to the CSI returned by the user terminal for transmitting the E-PDCCH for the user terminal, and performs beamforming operation to increase transmission performance. In the case that the channel information cannot be obtained accurately, or the adjacent cell interference fluctuates greatly with subframes and cannot be predicted, the E-PDCCH is transmitted using the frequency diversity manner, i.e., transmitted via discontinuous frequency resources.

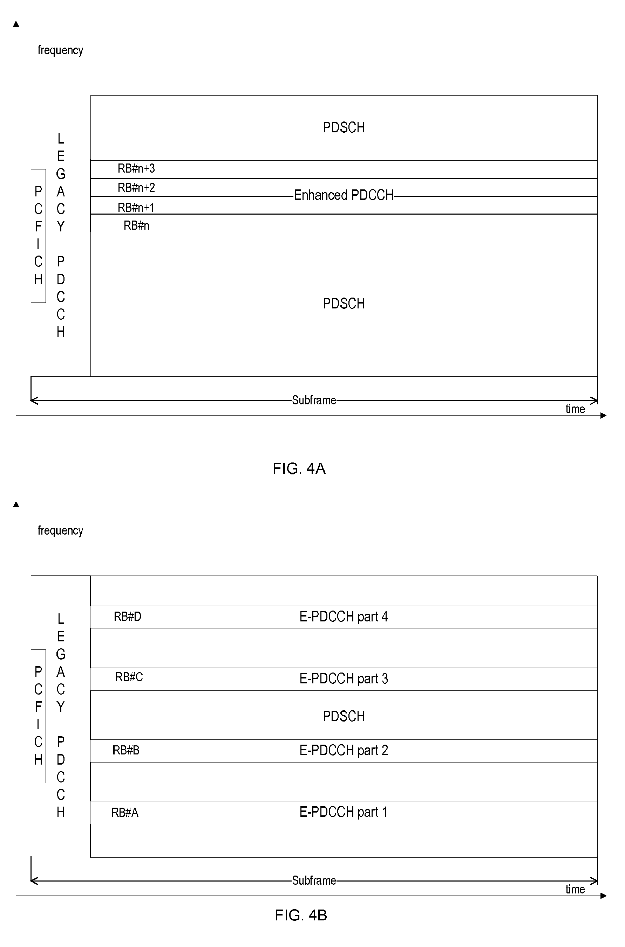

FIG. 4A and FIG. 4B are schematic diagrams illustrating E-PDCCH transmission solutions in a frequency-domain continuous scenario and a frequency-domain discontinuous scenario according to a conventional system. In this embodiment, the transmission of the DCI occupies resources of four physical resource block (PRB) pairs.

During the implementation of the present disclosure, the inventor finds at least the following problem in the conventional techniques.

Although the conventional technique determines that the E-PDCCH needs to support two transmission modes, i.e., localized transmission and distributed transmission, respectively applied in frequency continuous scenario and frequency discontinuous scenario, the transmission and configuration under the two transmission modes are not provided.


## SUMMARY OF THE DISCLOSURE

Embodiments of the present disclosure provide a method and an apparatus for transmitting downlink control information, so as to solve the problem that the conventional technique lacks transmission and configuration solution under the localized and distribution modes of the E-PDCCH.

An aspect of the present disclosure provides a method for transmitting downlink control information. The method includes:

configuring, by a base station, for a user terminal a localized enhanced physical downlink control channel (E-PDCCH) resource and a distributed E-PDCCH resource used for transmitting downlink control information;
transmitting, by the base station, the downlink control information to the user terminal via the localized E-PDCCH resource and the distributed E-PDCCH resource, such that the user terminal detects the downlink control information via a blind detection manner on the localized E-PDCCH resource and the distributed E-PDCCH resource;
wherein the localized E-PDCCH resource comprises resource elements which are continuous in a frequency domain, and the distributed E-PDCCH resource comprises resource elements which are discontinuous in the frequency domain.

Another aspect of the present disclosure provides a base station. the base station includes:

a configuration module, adapted to configure a localized E-PDCCH resource and a distributed E-PDCCH resource for a user terminal to transmit downlink control information; and
a transmitting module, adapted to transmit the downlink control information to the user terminal via the configured localized E-PDCCH resource and the distributed E-PDCCH resource, such that the user terminal detects via a blind detection manner the downlink control information on the localized E-PDCCH resource and the distributed E-PDCCH resource;
wherein the localized E-PDCCH resource comprises resource elements which are continuous in a frequency domain, and the distributed E-PDCCH resource comprises resource elements which are discontinuous in the frequency domain.

Still another aspect of the present disclosure provides a method for transmitting downlink control information. The method includes:

receiving, by a user terminal, a localized E-PDCCH resource and a distributed E-PDCCH resource configured by a base station for transmitting downlink control information; and
detecting, by the user terminal, a downlink control information (DCI) format respectively in a search space corresponding to the localized E-PDCCH resource and a search space corresponding to the distributed E-PDCCH resource, and obtaining the downlink control information transmitted by the base station;
wherein the localized E-PDCCH resource comprises resource elements which are continuous in a frequency domain, and the distributed E-PDCCH resource comprises resource elements which are discontinuous in the frequency domain.

Yet another aspect of the present disclosure provides a user terminal. The user terminal includes:

a receiving module, adapted to receive a localized E-PDCCH resource and a distributed E-PDCCH resource configured by a base station for transmitting downlink control information; and
a detecting module, adapted to detect a DCI format respectively in a search space corresponding to the localized E-PDCCH resource and a search space corresponding to the distributed E-PDCCH resource, and obtain the downlink control information transmitted by the base station;
wherein the localized E-PDCCH resource comprises resource elements which are continuous in a frequency domain, and the distributed E-PDCCH resource comprises resource elements which are discontinuous in the frequency domain.

Compared with the conventional techniques, the technical solution provided by the embodiments of the present disclosure has at least the following advantages.

The technical solution of the present disclosure provides a method for transmitting downlink control information to effectively support the two transmission modes of the E-PDCCH. The base station configures the localized E-PDCCH resource and the distributed E-PDCCH resource. The user terminal detects the DCI format in the search space corresponding to the localized E-PDCCH resource and the search space corresponding to the distributed E-PDCCH resource, so as to obtain the downlink control information transmitted by the base station. Thus, the problem that the conventional technique lacks transmission and configuration solution for the localized and distributed transmission modes of the E-PDCCH is solved. The E-PDCCH obtains channel selective gain and diversity transmission gain.

**BRIEF DESCRIPTION OF THE DRAWINGS**

FIG. 1 is a schematic diagram illustrating multiplexing of a control area and a data area in a downlink subframe according to a conventional system.
FIG. 2 is a schematic diagram illustrating a blind detection procedure according to a conventional system.
FIG. 3 is a schematic diagram illustrating an enhanced PDCCH according to a conventional system.
FIG. 4A and FIG. 4B are schematic diagrams illustrating E-PDCCH transmission solutions in a frequency-domain continuous scenario and a frequency-domain discontinuous scenario.
FIG. 5 is a flowchart illustrating a method for transmitting downlink control information at a base station end according to an embodiment of the present disclosure.

FIG. 6 is a flowchart illustrating a method for transmitting downlink control information at a user terminal end according to an embodiment of the present disclosure.

FIG. 7 is a schematic diagram illustrating a localized E-PDCCH resource according to an embodiment of the present disclosure.

FIG. 8 is a schematic diagram illustrating a distributed E-PDCCH resource according to an embodiment of the present disclosure.

FIG. 9 is a schematic diagram illustrating four possibilities of the E-REGs according to an embodiment of the present disclosure.

FIG. 10 is a schematic diagram illustrating mapping of the localized E-PDCCH resource according to an embodiment of the present disclosure.

FIG. 11 is a schematic diagram illustrating mapping of the distributed E-PDCCH resource according to an embodiment of the present disclosure.

FIG. 12 is a schematic diagram illustrating a search space in E-PDCCH cluster according to an embodiment of the present disclosure.

FIG. 13 is a schematic diagram illustrating a search space in another E-PDCCH cluster according to an embodiment of the present disclosure.

FIG. 14 is a schematic diagram illustrating a structure of a base station according to an embodiment of the present disclosure.

FIG. 15 is a schematic diagram illustrating a structure of a user terminal according to an embodiment of the present disclosure.

## DETAILED DESCRIPTION OF THE DISCLOSURE

As described in the background, in order to improve system performance of LTE-A and increase PDCCH capacity, enhanced PDCCH (E-PDCCH) is introduced in Rel-11. In current standards, it is defined that the E-PDCCH should support two modes: localized mode and distributed mode, respectively applied in a frequency-domain continuous scenario and a frequency-domain discontinuous scenario. There is no detailed transmission and configuration solution for these two transmission modes yet.

In contrast to this, an embodiment of the present disclosure provides a transmission solution for transmitting the E-PDCCH in the localized and distributed transmission modes and provides a configuration method for the search space, so as to effectively support the localized and distributed transmission modes of the E-PDCCH.

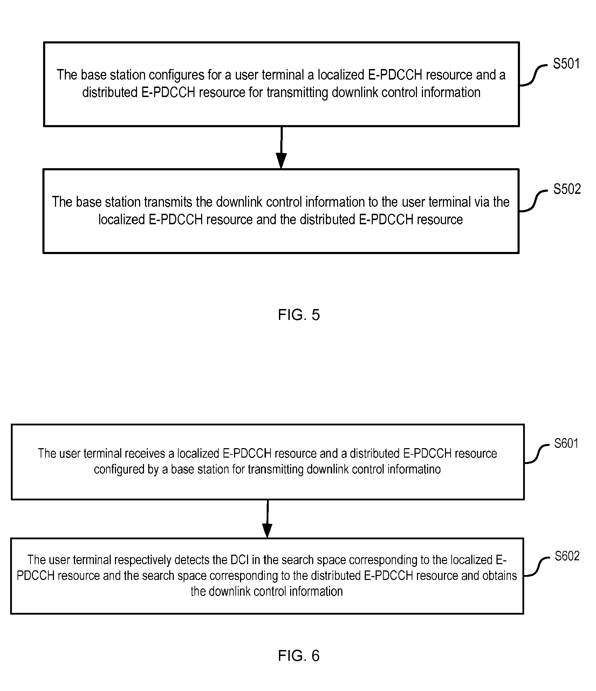

FIG. 5 is a schematic diagram illustrating a method for transmitting downlink control information at a base station end according to an embodiment of the present disclosure. As shown in FIG. 5, the method includes the following.

At block S501, the base station configures for the UE a localized E-PDCCH resource and a distributed E-PDCCH resource which are used for transmitting downlink control information.

The localized E-PDCCH resource includes resource elements which are continuous in the frequency domain. The distributed E-PDCCH resource includes resource elements which are discontinuous in the frequency domain.

In a practical scenario, the above two kinds of resources are described in detail as follows.

(1) The localized resource consists of one or more E-PDCCH clusters.

(2) The distributed E-PDCCH consists of a plurality of PRBs/PRB pairs which are discontinuous in the frequency domain or consists of discontinuous E-PDCCH clusters.

In a practical application, according to the relationship of the two kinds of resources, the processing of this block may include the following three cases.

Case 1, the base station configures via the same configuration signaling completely overlapped localized E-PDCCH resource and distributed E-PDCCH resource for the UE.

In a practical application scenario, the base station may configure the completely overlapped localized E-PDCCH resource and distributed E-PDCCH resource for the UE via one configuration signaling, or via two identical configuration signaling.

Such variations do not affect the protection scope of the present disclosure.

Case 2, the base station occupies some PRBs/PRB pair resources in the E-PDCCH cluster via signaling notification or a protocol defined method, and configures partially overlapped localized E-PDCCH resource and distributed E-PDCCH resource for the UE.

In particular, the base station may indicate by an offset that the distributed E-PDCCH resource occupies a PRB resource on a fixed position in each E-PDCCH cluster of the localized E-PDCCH resource, so as to configure the partially overlapped localized E-PDCCH resource and distributed E-PDCCH resource for the UE.

Case 3, the base station configures independent localized E-PDCCH resource and distributed E-PDCCH resource for the UE via independent configuration signaling.

Whichever of the above cases is adopted, the procedure that the base station configures the corresponding resources may be as follows.

A, localized E-PDCCH resource

the base station indicates an initial PRB index of the first cluster for the UE via configuration signaling, wherein a frequency domain interval between different clusters may be indicated by another signaling or defined by a protocol; or

the base station respectively indicates the initial PRB index of each cluster for the UE via configuration signaling.

B, distributed E-PDCCH resource

If the distributed E-PDCCH resource consists of a plurality of E-PDCCH clusters which are discontinuous in the frequency domain, the processing of this block includes:

the base station indicates the initial PRB index of the first cluster for the UE via configuration signaling, wherein the frequency domain interval between different clusters is indicated via another signaling or is defined by a protocol; or

the base station respectively indicates the initial PRB index of each cluster for the UE via configuration signaling.

If the distributed E-PDCCH resource consists of PRBs/PRB pairs which are discontinuous in the frequency domain, the processing of this block includes:

the base station indicates positions of the PRBs occupied by the distributed E-PDCCH resource for the UE via higher layer signaling; or

the base station indicates an initial position of the PRBs occupied by the distributed E-PDCCH resource and the number of PRBs occupied by the distributed E-PDCCH resource for the UE via higher layer signaling, wherein the PRB resources corresponding to the distributed E-PDCCH resource is uniformly distributed in whole downlink system bandwidth.

The process of the base station indicating the initial position of the PRBs and the number of PRBs occupied by the distributed E-PDCCH resource for the UE via the higher layer signaling includes:

the base station indicates the initial position of the PRBs and the number of PRBs occupied by the distributed E-PDCCH resource for the UE via a radio resource control (RRC) signaling; or

the base station indicates the initial position of the PRB occupied by the distributed E-PDCCH resource for the UE via higher layer signaling, wherein the number of PRBs occupied by the control information is relevant to the downlink bandwidth.

At block S502, the base station transmits downlink control information on the localized E-PDCCH resource and the distributed E-PDCCH resource, such that the user terminal detects the transmitted downlink control information on the localized E-PDCCH resource and the distributed E-PDCCH resource via a blind detection.

In a practical scenario, the processing of this block includes:

the base station transmits the downlink control information to the UE on E-CCEs in the E-PDCCH resource; according to a required coding rate, the downlink control information may be transmitted on multiple E-CCEs.

Furthermore, in a practical application, it should be noted that,

one E-CCE consists of one PRB or consists of one or more E-REGs;

on E-REG consists of multiple consecutive available REs in a physical resource set except for legacy PDCCH and reference signal.

Accordingly, following downlink control information detection and receiving operations are performed at the user terminal end.

FIG. 6 is a flowchart illustrating a method for transmitting downlink control information at a user terminal end according to an embodiment of the present disclosure. As shown in FIG. 6, the method includes the following.

At block S601, the user terminal receives a localized E-PDCCH resource and a distributed E-PDCCH resource configured by a base station for transmitting downlink control information.

The localized E-PDCCH resource includes resource elements which are continuous in the frequency domain. The distributed E-PDCCH resource includes resource elements which are discontinuous in the frequency domain.

Similar to block S501, in a practical scenario, the above two kinds of resources are described in detail as follows.

(1) The localized resource consists of one or more E-PDCCH clusters.

(2) The distributed E-PDCCH consists of a plurality of PRBs/PRB pairs which are discontinuous in the frequency domain or consists of discontinuous E-PDCCH clusters.

In a practical application, according to the relationship of the two kinds of resources, the processing of this block may include the following three cases.

Case 1, the user terminal receives completely overlapped localized E-PDCCH resource and distributed E-PDCCH resource configured by the base station via the same configuration signaling.

In a practical application scenario, the user terminal may receive the completely overlapped localized E-PDCCH resource and distributed E-PDCCH resource configured by the base station via one configuration signaling or two identical configuration signaling.

Such variation does not affect the protection scope of the present disclosure.

Case 2, the user terminal receives some PRBs/PRB pair resources in the E-PDCCH cluster occupied by the base station via signaling notification or a protocol defined method, and receives partially overlapped localized E-PDCCH resource and distributed E-PDCCH resource configured for the UE.

In particular, the user terminal may receive a PRB resource on a fixed position indicated by the base station by an offset in each E-PDCCH cluster of the localized E-PDCCH resource occupied by the distributed E-PDCCH resource, and receives the partially overlapped localized E-PDCCH resource and distributed E-PDCCH resource configured for the UE.

Case 3, the user terminal receives independent localized E-PDCCH resource and distributed E-PDCCH resource configured by the base station via independent configuration signaling.

At block S602, the user terminal detects DCI format in a search space corresponding to the localized E-PDCCH resource and a search space corresponding to the distributed E-PDCCH resource and obtains the downlink control information transmitted by the base station.

In a practical application, before this block, the search space corresponding to the localized E-PDCCH resource and the search space corresponding to the distributed E-PDCCH resource need to be determined. A detailed determination procedure may include the following.

For downlink control information transmitted via the localized E-PDCCH resource, the user terminal determines that the search space corresponding to the localized E-PDCCH resource is allocated according to E-PDCCH cluster, wherein an initial position of the search space of the localized E-PDCCH resource of each aggregation level begins from an initial CCE of each E-PDCCH cluster.

For downlink control information transmitted via the distributed E-PDCCH resource, the user terminal determines that the search space corresponding to the distributed E-PDCCH resource is allocated according to all E-CCEs in the distributed E-PDCCH resource.

After the search spaces are determined, the processing in this block includes:

the user terminal detects DCI format in at least one E-PDCCH candidate, obtains the downlink control information transmitted by the base station, wherein the E-PDCCH candidates occupy resource elements which are continuous in the frequency domain;

the user terminal detects the DCI format in at least one E-PDCCH candidate, obtains the downlink control information transmitted by the base station, wherein the E-PDCCH candidates occupy resource elements which are discontinuous in the frequency domain.

It should be noted that, the user terminal determines an E-PDCCH maximum blind detection number shared by the search space of the localized E-PDCCH resource and the search space of the distributed E-PDCCH resource.

The configuration information of the E-PDCCH resource used for transmitting the downlink control information received by the user terminal may be implemented similarly as described in block S501. The transmission of the downlink control information may be similar as that described in block S502. Those are not repeated herein.

In addition, in the above description, it is assumed that the search space of the localized E-PDCCH resource and the search space of the distributed E-PDCCH resource coexist. In a practical application, in the case that the search space of the localized E-PDCCH resource and the search space of the distributed E-PDCCH resource cannot coexist, the user terminal has to determine a search space in which the detection is performed according to a specific rule. For example, it is possible to define that the user terminal detects in a search space which is configured by higher layer signaling, whereas no detection is performed in the other search space. Variations of the rule do not affect the protection scope of the present disclosure.

Based on the above, if the search space of the localized E-PDCCH resource and the search space of the distributed E-PDCCH resource cannot coexist, the user terminal determines an E-PDCCH maximum blind detection number respectively for the search space of the localized E-PDCCH resource and/or the search space of the distributed E-PDCCH resource. The number of E-PDCCH candidate resources in the search space of the localized E-PDCCH resource and/or the number of E-PDCCH candidate resources in the search space of the distributed E-PDCCH resource may be defined according to the maximum blind detection numbers.

Compared with the conventional techniques, the technical solution provided by the embodiments of the present disclosure has at least the following advantages.

The technical solution of the present disclosure provides a method for transmitting downlink control information to effectively support the two transmission modes of the E-PDCCH. The base station configures the localized E-PDCCH resource and the distributed E-PDCCH resource. The user terminal detects the DCI format in the search space corresponding to the localized E-PDCCH resource and the search space corresponding to the distributed E-PDCCH resource, so as to obtain the downlink control information transmitted by the base station. Thus, the problem that the conventional technique lacks transmission and configuration solution for the localized and distributed transmission modes of the E-PDCCH is solved. The E-PDCCH obtains channel selective gain and diversity transmission gain.

Hereinafter, the technical solution provided by the embodiments of the present disclosure is described with reference to a detail application scenario.

An embodiment of the present disclosure provides a method for transmitting downlink control information, so as to effectively support two transmission modes of the E-PDCCH.

A main technical idea of the present disclosure includes: the base station configures the E-PDCCH resource for transmitting the downlink control information. Then, the base station transmits the downlink control information on the configured E-PDCCH resource. The UE detects the transmitted downlink control information on the E-PDCCH resource via a blind detection manner.

In the technical solution, the E-PDCCH resource may be defined as a time-frequency resource for transmitting the E-PDCCH.

On the other hand, the E-PDCCH candidate may be defined as a unit, e.g., search space on which the user terminal needs to detect the DCI format. In particular,

the UE detects the DCI format on at least one E-PDCCH candidate, wherein the E-PDCCH candidates occupy continuous resource elements in the frequency domain (i.e., the search space of the localized E-PDCCH resource);

the UE detects the DCI format on at least E-PDCCH candidate, wherein the E-PDCCH candidates occupy discontinuous resource elements in the frequency domain (i.e., the search space of the distributed E-PDCCH resource).

In addition, the E-PDCCH resource includes E-PDCCH resource used for localized transmission and/or E-PDCCH resource used for distributed transmission (i.e., the above described localized E-PDCCH resource and/or distributed E-PDCCH resource).

In a practical application, the localized E-PDCCH resource and/or the distributed E-PDCCH resource may be configured via the following manners.

1) The localized E-PDCCH resource and the distributed E-PDCCH resource are completely overlapped, and their configuration signaling are the same.

In a practical application scenario, the above configuration signaling may be the one configuration signaling, or two identical configuration signaling. Such variations do not affect the protection scope of the present disclosure.

2) The localized E-PDCCH resource and the distributed E-PDCCH resource are partially overlapped. The distributed E-PDCCH resource occupies some PRBs/PRB pairs in the E-PDCCH cluster via signaling notification or a protocol defined method. In one possible manner, an offset is configured to indicate a PRB resource in a fixed position in each E-PDCCH cluster of the localized E-PDCCH resource occupied by the distributed E-PDCCH resource.

3) The localized E-PDCCH resource and the distributed E-PDCCH resource are configured independently

Hereinafter, the two kinds of resources are described respectively.

(1) The localized E-PDCCH resource

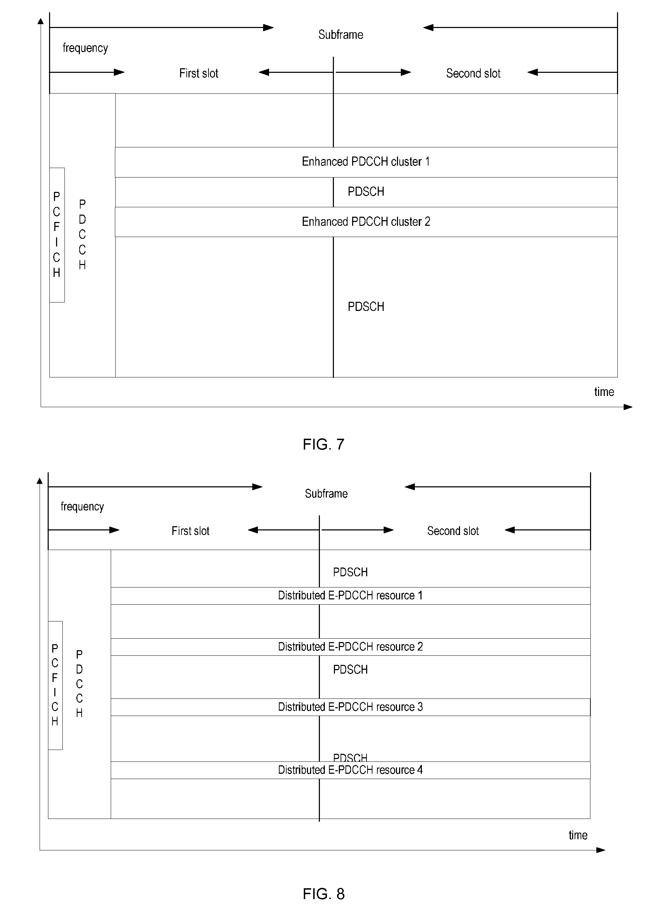

In a practical application, the localized E-PDCCH resource consists of one or more E-PDCCH clusters, as shown in FIG. 7.

The configuration of the localized E-PDCCH resource is indicated by higher layer signaling, wherein exemplary configuration is as follows.

Method A, an initial PRB index of the first cluster is indicated. At the same time, a frequency domain interval between different clusters is indicated via another signaling or is defined by a protocol.

Method B, an initial PRB index of each cluster is indicated respectively.

(2) The distributed E-PDCCH resource

The distributed E-PDCCH resource consists of multiple PRBs/PRB pairs which are discontinuous in the frequency domain or consists of E-PDCCH clusters which are discontinuous in the frequency domain, as shown in FIG. 8.

In a practical scenario, the configuration signaling may have the following two manners.

In a first manner, if the PRBs/PRB pairs are adopted, there are the following manners.

(1) Indicate positions of the PRBs occupied by the distributed transmitted E-PDCCH. The user terminal may be notified by higher layer signaling.

(2) Indicate an initial position of the PRBs occupied by the distributed E-PDCCH and the number of the PRBs being occupied. The PRB resources of the distributed transmitted E-PDCCH are uniformly distributed in the whole downlink system bandwidth.

In particular, the initial position of the PRBs and the number of PRBs being occupied may be indicated by RRC signaling. Or, the initial position of the PRBs may be indicated by the RRC signaling, and the number of PRBs occupied by the control information is relevant to the downlink bandwidth.

In a second manner, if the E-PDCCH clusters are adopted, the configuration is similar to that of the above described localized E-PDCCH resource and is not repeated herein.

It should be noted that, the downlink control information (DCI) is transmitted on the E-CCEs. According to a required coding rate, one DCI may be transmitted on N E-CCEs, e.g., N={1, 2, 4, 8}. Herein, the E-CCE may be a PRB or consists of one or more E-REGs.

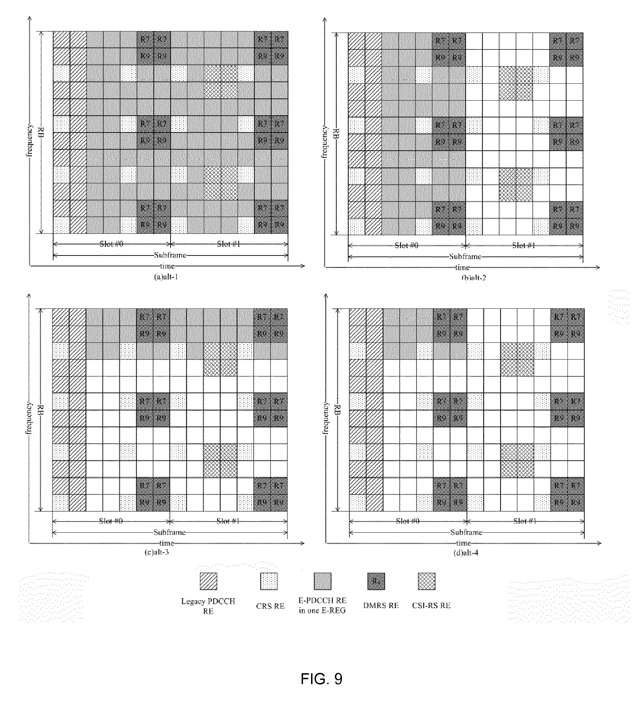

An E-REG consists of multiple consecutive available REs in a physical resource set except for legacy PDCCH and reference signal (CRS, DMRS, CSI-RS, PRS, etc.). The E-REG may have many possible definitions. FIG. 9 shows four possibilities of the E-REGs.

The E-CCE resources of the localized E-PDCCH may be defined differently from the E-CCE resources of the distributed E-PDCCH.

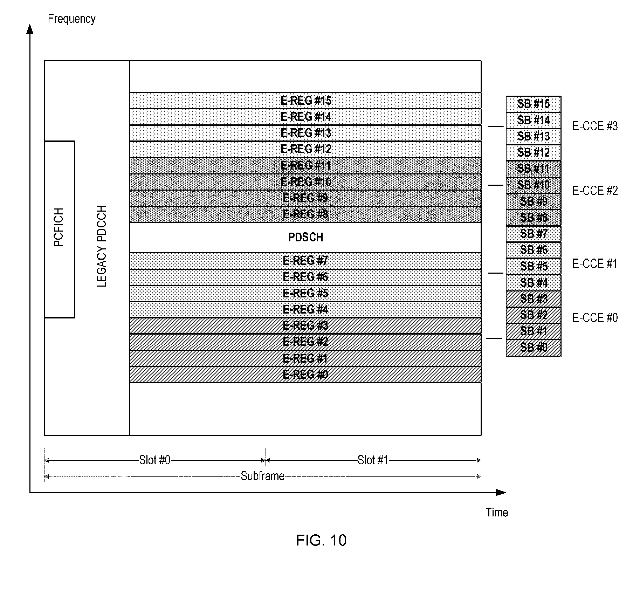

For example, the E-CCEs of the localized E-PDCCH may consist of E-REGs as shown in alt-2 of FIG. 10. The E-CCE resource of the distributed E-PDCCH may consist of four E-REGs as shown in alt-4 of FIG. 10.

In a practical application, in the localized E-PDCCH resource, one E-PDCCH cluster includes one or more E-CCEs.

When the downlink control information is transmitted on the localized E-PDCCH resource, modulated symbols of the downlink control information are directly mapped to the physical resources. FIG. 10 shows a mapping of the localized E-PDCCH resource in which one E-CCE includes four E-REGs and one E-PDCCH cluster includes two E-CCEs.

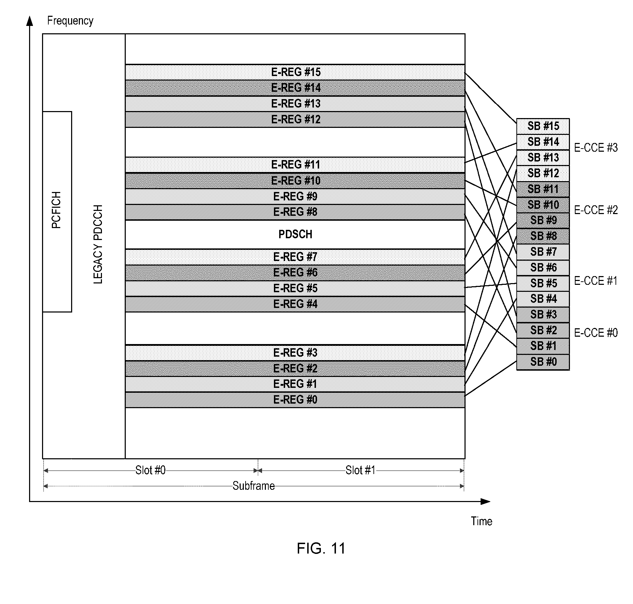

It should be noted that, when the downlink control information is transmitted on the distributed E-PDCCH resource, multiple E-REGs in one E-CCE may be mapped to frequency distributed physical resources. The mapping may be implemented via an interleaving manner or a fixed mapping manner. FIG. 11 shows a mapping of the distributed E-PDCCH in which one E-CCE includes four E-REGs.

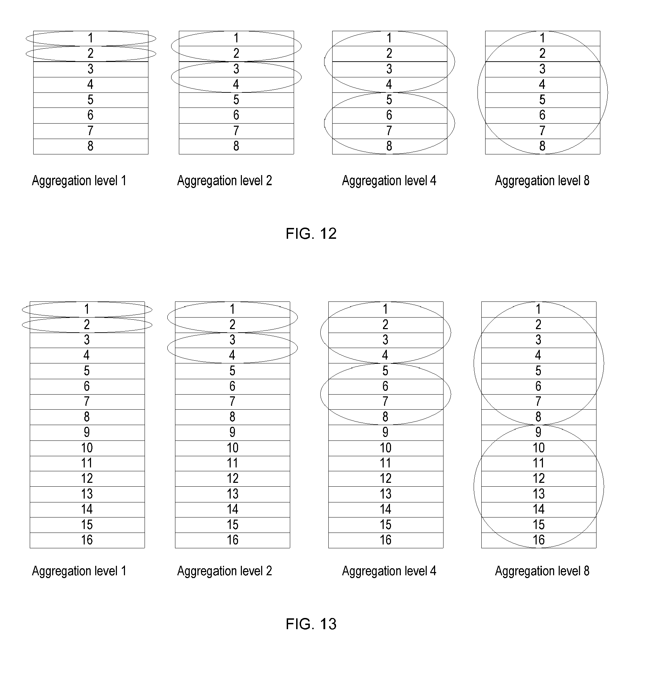

For the downlink control information transmitted via the localized E-PDCCH, the search space of the E-PDCCH is allocated according to E-PDCCH clusters. The initial position of the search space of each aggregation level begins on an initial CCE of each E-PDCCH cluster. FIG. 12 shows search spaces of an E-PDCCH cluster consists of 8 E-CCEs according to an embodiment of the present disclosure. The number of candidate resources of different aggregation levels of the E-PDCCH cluster is restricted by the maximum blind detection number of the user terminal and may be defined via various manners.

At the same time, if the system configures multiple E-PDCCH clusters for the user terminal, there are multiple E-PDCCH search spaces determined by the E-PDCCH clusters.

For the downlink control information transmitted via the distributed E-PDCCH, the search space of the E-PDCCH is determined according to all E-CCEs in the distributed E-PDCCH resource (this is different from the localized E-PDCCH transmission). FIG. 13 shows search spaces in the E-PDCCH cluster consists of 16 E-CCEs according to an embodiment of the present disclosure. The number of candidate resources of different aggregation levels is determined by the maximum blind detection number of the user terminal and may be defined via various manners.

For a user terminal, the coexistence of the search space of the localized E-PDCCH and the search space of the distributed E-PDCCH may have the following possibilities.

First, the search space of the localized E-PDCCH resource and the search space of the distributed E-PDCCH resource cannot coexist. In which search space the user terminal performs the detection is configured by higher layer signaling.

Second, the search space of the localized E-PDCCH resource and the search space of the distributed E-PDCCH resource coexist. The user terminal has to detect in the two search spaces.

For the first one, the detection in the search space of the localized E-PDCCH resource and/or the search space of the distributed E-PDCCH resource may respectively reach the maximum blind detection number. The number of the E-PDCCH candidate resources in respective search space may be defined according to the maximum blind detection number.

Embodiment 1

In the localized E-PDCCH resource, the numbers of candidate E-PDCCH channels of aggregation levels {1, 2, 4, 8} of each E-PDCCH cluster are {2, 2, 2, 1}. If the localized E-PDCCH resource includes 2 E-PDCCH clusters, the total number of blind detections is calculated as follows.

The number of blind detection in each E-PDCCH cluster is (2+2+2+1)*2=14, wherein the last 2 denotes that DCI in two kinds of formats need to be detected in each E-PDCCH candidate channel.

The number of E-PDCCH clusters is 2.

The total number of blind detection is 14*2=28.

Embodiment 2

In the distributed E-PDCCH resource, the numbers of candidate E-PDCCH channels of aggregation levels {1, 2, 4, 8} of each E-PDCCH cluster are {6, 6, 2, 2}. The total number of blind detections is (6+6+2+2)*2=32, wherein the last 2 denotes that DCI in two kinds of formats need to be detected in each E-PDCCH candidate channel.

For the second method, the search space of the localized E-PDCCH resource and the search space of the distributed E-PDCCH resource share the maximum blind detection number. Therefore, it is required to reasonably allocate the number of blind detection in the search spaces of the localized E-PDCCH resource and the distributed E-PDCCH resource.

Embodiment 3

The localized E-PDCCH resource includes 2 E-PDCCH clusters. The numbers of candidate E-PDCCH channels of aggregation levels {1, 2, 4, 8} of each E-PDCCH cluster are {2, 2, 0, 0}. In the distributed E-PDCCH resource, the numbers of candidate E-PDCCH channels of aggregation levels {1, 2, 4, 8} are {2, 2, 2, 2}. The total number of blind detection is calculated as follows.

The number of blind detection in the localized E-PDCCH resource:

the number of blind detection in each E-PDCCH cluster is (2+2+0+0)*2=8, wherein the last 2 denotes that DCI in two kinds of formats need to be detected in each E-PDCCH candidate channel.

The number of E-PDCCH clusters is 2.

The total number of blind detection of the localized E-PDCCH resource is 8*2=16.

The number of blind detection in the distributed E-PDCCH resource:

(2+2+2+2)*2=16, wherein the last 2 denotes that DCI in two kinds of formats need to be detected in each E-PDCCH candidate channel.

The total number of blind detection is 16+16=32.

In a practical scenario, when detecting in the search space of the E-PDCCH, the user terminal has to perform detection respectively in the search space of the localized E-PDCCH resource and/or the search space of the distributed E-PDCCH resource.

Compared with the conventional technique, the technical solution provided by the embodiments of the present disclosure has at least the following advantages:

The technical solution of the present disclosure provides a method for transmitting downlink control information to effectively support the two transmission modes of the E-PDCCH. The base station configures the localized E-PDCCH resource and the distributed E-PDCCH resource. The user terminal detects the DCI format in the search space corresponding to the localized E-PDCCH resource and the search space corresponding to the distributed E-PDCCH resource, so as to obtain the downlink control information transmitted by the base station. Thus, the problem that the conventional technique lacks transmission and configuration solution for the localized and distributed transmission modes of the E-PDCCH is solved. The E-PDCCH obtains channel selective gain and diversity transmission gain.

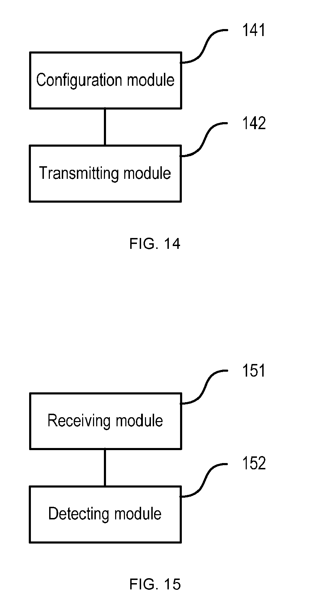

In order to realize the technical solution of the present disclosure, an embodiment of the present disclosure provides a base station, as shown in FIG. 14. The base station includes at least:

a configuration module 141, adapted to configure for a user terminal a localized E-PDCCH resource and a distributed E-PDCCH resource for transmitting downlink control information; and

a transmitting module 142, adapted to transmit the downlink control information to the user terminal via the configured localized E-PDCCH resource and the distributed E-PDCCH resource, such that the user terminal detects, via a blind detection manner, the downlink control information on the localized E-PDCCH resource and the distributed E-PDCCH resource;

wherein the localized E-PDCCH resource consists of resource elements which are continuous in the frequency domain, the distributed E-PDCCH resource consists of resource elements which are discontinuous in the frequency domain.

The configuration module 141 is further adapted to:

configure completely overlapped localized E-PDCCH resource and distributed E-PDCCH resource for the user terminal via identical configuration signaling; or

occupy some PRBs/PRB pairs in the E-PDCCH cluster via signaling notification or a protocol defined method, and configure partially overlapped localized E-PDCCH resource and distributed E-PDCCH resource for the user terminal; or

configure independent localized E-PDCCH resource and distributed E-PDCCH resource for the user terminal via independent configuration signaling.

The configuration module 141 is further adapted to:

configure the completely overlapped localized E-PDCCH resource and distributed E-PDCCH resource for the user terminal via one configuration signaling; or

configure the completely overlapped localized E-PDCCH resource and distributed E-PDCCH resource for the user terminal via two identical configuration signaling.

The configuration module 141 is further adapted to:

indicate, through configuring an offset, a PRB resource in a fixed position in each E-PDCCH cluster of the localized E-PDCCH resource occupied by the distributed E-PDCCH resource, so as to configure the partially overlapped localized E-PDCCH resource and the distributed E-PDCCH resource for the user terminal.

The configuration module 141 is further adapted to:

notify the user terminal of an initial PRB index of a first cluster via configuration signaling, wherein a frequency domain interval between different clusters is indicated via another signaling or defined by a protocol; or

respectively notify the user terminal of an initial PRB index of each cluster via configuration signaling.

The configuration module 141 is further adapted to:

if the distributed E-PDCCH resource consists of multiple discontinuous E-PDCCH clusters,

notify the user terminal of an initial PRB index of a first cluster via configuration signaling, wherein a frequency domain interval between different clusters is indicated via another signaling or defined by a protocol; or

respectively notify the user terminal of an initial PRB index of each cluster via configuration signaling.

The configuration module 141 is further adapted to:

if the distributed E-PDCCH resource consists of multiple discontinuous PRBs/PRB pairs,

configure positions of the PRBs occupied by the distributed E-PDCCH resource for the user terminal via configuration signaling; or

configure an initial position of the PRBs and the number of PRBs occupied by the distributed E-PDCCH resource for the user terminal via configuration signaling, wherein the PRB resources corresponding to the distributed E-PDCCH resource are uniformly distributed in the whole downlink system bandwidth.

The configuration module 141 is further adapted to:

configure the initial position of the PRBs and the number of PRBs occupied by the distributed E-PDCCH resource for the user terminal via RRC signaling; or
configure the initial position of the PRBs occupied by the distributed E-PDCCH resource for the user terminal via RRC signaling; wherein the number of PRBs occupied by the control information is relevant to the downlink bandwidth of the system.

It should be noted that, the transmitting module 142 is adapted to:

transmit the downlink control information on the E-CCEs included in the E-PDCCH resource;
wherein according to a required coding rate, one downlink control information may be transmitted on multiple E-CCEs.

An embodiment of the present disclosure provides a user terminal, as shown in FIG. 15. The user terminal includes at least:

a receiving module 151, adapted to receive a localized E-PDCCH resource and a distributed E-PDCCH resource configured by a base station for transmitting downlink control information; and
a detecting module 152, adapted to detect a DCI format respectively in a search space corresponding to the localized E-PDCCH resource and a search space corresponding to the distributed E-PDCCH resource, and obtain the downlink control information transmitted by the base station.

The localized E-PDCCH resource consists of resource elements which are continuous in the frequency domain. The distributed E-PDCCH resource consists of resource elements which are discontinuous in the frequency domain.
The receiving module 151 is further adapted to:

receive completely overlapped localized E-PDCCH resource and distributed E-PDCCH resource configured by the base station via identical configuration signaling; or
receive some PRBs/PRB pairs in the E-PDCCH cluster occupied by the base station via signaling notification or a protocol defined method, and receive partially overlapped localized E-PDCCH resource and distributed E-PDCCH resource; or
receive independent localized E-PDCCH resource and distributed E-PDCCH resource configured by the base station via independent configuration signaling.

The receiving module 151 is further adapted to
receive the completely overlapped localized E-PDCCH resource and distributed E-PDCCH resource configured by the base station via one configuration signaling; or
receive the completely overlapped localized E-PDCCH resource and distributed E-PDCCH resource configured by the base station via two identical configuration signaling.
The receiving module 151 is further adapted to:

receive a PRB resource in a fixed position in each E-PDCCH cluster of the localized E-PDCCH resource occupied by the distributed E-PDCCH resource indicated by the base station by an offset, and receive the partially overlapped localized E-PDCCH resource and the distributed E-PDCCH resource.

The detecting module 152 is adapted to:

for the downlink control information transmitted via the localized E-PDCCH resource, determine that the search space of the localized E-PDCCH resource is allocated based on E-PDCCH cluster, wherein the initial position of the search space of each aggregation level begins from an initial CCE of each E-PDCCH cluster;
for the downlink control information transmitted via the distributed E-PDCCH resource, determined that the search space of the distributed E-PDCCH resource is determined according to all E-CCEs of the distributed E-PDCCH.

The detecting module 152 is further adapted to:

detect the DCI format on at least one E-PDCCH candidate, obtain the downlink control information transmitted by the base station, wherein the E-PDCCH candidates occupy continuous resource elements in the frequency domain;
detect the DCI format in at least one E-PDCCH candidate, obtain the downlink control information transmitted by the base station, wherein the E-PDCCH candidates occupy discontinuous resource elements in the frequency domain.

It should be noted that, the detecting module 152 is further adapted to determine a maximum blind detection number shared by the search space of the localized E-PDCCH resource and the search space of the distributed E-PDCCH resource.

Compared with the conventional technique, the technical solution provided by the embodiments of the present disclosure has at least the following advantages:

The technical solution of the present disclosure provides a method for transmitting downlink control information to effectively support the two transmission modes of the E-PDCCH. The base station configures the localized E-PDCCH resource and the distributed E-PDCCH resource. The user terminal detects the DCI format in the search space corresponding to the localized E-PDCCH resource and the search space corresponding to the distributed E-PDCCH resource, so as to obtain the downlink control information transmitted by the base station. Thus, the problem that the conventional technique lacks transmission and configuration solution for the localized and distributed transmission modes of the E-PDCCH is solved. The E-PDCCH obtains channel selective gain and diversity transmission gain.

Based on the above description of the embodiments of the present disclosure, those skilled in the art would know that the embodiments of the present disclosure may be implemented by hardware or by software and a necessary hardware platform. Based on this, the technical solution provided by the embodiments of the present disclosure may be embedded in a software product. The software product may be stored on a non-transitory storage medium (such as CD-ROM, U-disk, portable disk, etc.), including a set of instructions executable by a computer device (such as a personal computer, a server or a network device, etc.) to perform the method described by the embodiments of the present disclosure.

Those skilled in the art would know that the drawings are merely embodiments. The modules or blocks in the drawings may not be necessary for implementing the embodiments of the present disclosure.

Those skilled in the art would also know that the modules in the apparatus in each application scenario may be arranged in an apparatus in the application scenario according to the description of the application scenario. Some variations are also possible for the modules and the modules may be located in one or more apparatuses. The modules may be combined into one module or divided into several sub-modules.

The serial numbers of the embodiments of the present disclosure are merely used for facilitating the description but not denote any preference of the embodiments.

What has been described and illustrated herein is a preferred embodiment of the disclosure along with some of its variations. The terms, descriptions and figures used herein are set forth by way of illustration only and are not meant as limitations. Many variations are possible within the spirit and scope of the disclosure, which is intended to be defined by the following claims -- and their equivalents -- in which all terms are meant in their broadest reasonable sense unless otherwise indicated.

**Claims**

1. A method for transmitting downlink control information, comprising:

   configuring, by a base station, for a user terminal a localized enhanced physical downlink control channel (E-PDCCH) resource and a distributed E-PDCCH resource used for transmitting downlink control information;
   transmitting, by the base station, the downlink control information to the user terminal via the localized E-PDCCH resource and the distributed E-PDCCH resource, such that the user terminal detects the downlink control information via a blind detection manner on the localized E-PDCCH resource and the distributed E-PDCCH resource;
   wherein the localized E-PDCCH resource comprises resource elements which are continuous in a frequency domain, and the distributed E-PDCCH resource comprises resource elements which are discontinuous in the frequency domain.

2. The method of claim 1, wherein
   the localized E-PDCCH resource comprises one or more E-PDCCH clusters; and
   the distributed E-PDCCH resource comprises a plurality of physical resource blocks (PRBs)/PRB pairs which are discontinuous in the frequency domain or comprises discontinuous E-PDCCH clusters.

3. The method of claim 2, wherein the configuring the E-PDCCH resource for the user terminal to transmit the downlink control information comprises:

   configuring, by the base station, completely overlapped localized E-PDCCH resource and distributed E-PDCCH resource for the user terminal via identical configuration signaling; or

occupying, by the base station, PRBs/PRB pair resources in the E-PDCCH cluster via a signaling notification or a protocol defined method, and configuring partially overlapped localized E-PDCCH resource and distributed E-PDCCH resource for the user terminal; or

configuring, by the base station, independent localized E-PDCCH resource and distributed E-PDCCH resource for the user terminal via independent configuration signaling.

4. The method of claim 3, wherein the configuring the completely overlapped localized E-PDCCH resource and distributed E-PDCCH resource by the base station via the identical configuration signaling comprises:

configuring, by the base station, the completely overlapped localized E-PDCCH resource and distributed E-PDCCH resource via one configuration signaling; or

configuring, by the base station, the completely overlapped localized E-PDCCH resource and distributed E-PDCCH resource via two identical configuration signaling.

5. The method of claim 3, wherein the base station occupying some PRBs/PRB pair resources in the E-PDCCH cluster via a signaling notification or a protocol defined method and configuring partially overlapped localized E-PDCCH resource and distributed E-PDCCH resource for the user terminal comprises:

indicating, by the base station, a PRB resource in a fixed position in each E-PDCCH cluster of the localized E-PDCCH resource occupied by the distributed E-PDCCH resource by configuring an offset, so as to configure the partially overlapped localized E-PDCCH resource and distributed E-PDCCH resource for the user terminal.

6. The method of claim 2 or 3, wherein the base station configuring the localized E-PDCCH resource via configuration signaling comprises:

indicating, by the base station, an initial PRB index of a first cluster for the user terminal, wherein a frequency domain interval between different clusters is indicated via another signaling or is defined by a protocol; or

configuring, by the base station, an initial PRB index of each cluster for the user terminal via configuration signaling.

7. The method of claim 2 or 3, wherein if the distributed E-PDCCH resource comprises a plurality of E-PDCCH clusters which are discontinuous in the frequency domain, the base station configuring the distributed E-PDCCH resource for the user terminal via the configuration signaling comprises:

indicating, by the base station, an initial PRB index of a first cluster for the user terminal via configuration signaling, wherein a frequency domain interval between different clusters is indicated via another signaling or is defined by a protocol; or

configuring, by the base station, an initial PRB index of each cluster for the user terminal via configuration signaling.

8. The method of claim 2 or 3, wherein if the distributed E-PDCCH resource comprises a plurality of PRBs/PRB pairs which are discontinuous in the frequency domain, the base station configuring the distributed E-PDCCH resource for the user terminal via the configuration signaling comprises:

configuring, by the base station, positions of the PRBs occupied by the distributed E-PDCCH resource for the user terminal via configuration signaling; or

configuring, by the base station, an initial position of the PRBs occupied by the distributed E-PDCCH resource and a number of PRBs occupied by the distributed E-PDCCH resource for the user terminal via configuration signaling, wherein the PRB resources corresponding to the distributed E-PDCCH resource are uniformly distributed in a whole downlink system bandwidth.

9. The method of claim 8, wherein the configuring the initial position of the PRBs and the number of PRBs occupied by the distributed E-PDCCH resource for the user terminal via configuration signaling comprises:

configuring the initial position of the PRBs and the number of PRBs occupied by the distributed E-PDCCH resource for the user terminal via radio resource control (RRC) signaling; or

configuring the initial position of the PRBs occupied by the distributed E-PDCCH resource for the user terminal via RRC signaling, wherein the number of PRBs occupied by control information is relevant to the downlink system bandwidth.

10. The method of claim 1, wherein the transmitting the downlink control information to the user terminal via the localized E-PDCCH resource and the distributed E-PDCCH resource comprises:

transmitting the downlink control information to the user terminal via enhanced control channel elements (E-CCEs) comprised in the localized E-PDCCH resource and the distributed E-PDCCH resource;
wherein according to a required coding rate, the downlink control information is transmitted via a plurality of E-CCEs.

11. The method of claim 10, wherein
one E-CCE comprises one PRB or comprises one or more E-REGs;
one E-REG comprises a plurality of consecutive available REs expect for legacy PDCCH and reference signal in a physical resource set.

12. A base station, comprising:

a configuration module, adapted to configure a localized E-PDCCH resource and a distributed E-PDCCH resource for a user terminal to transmit downlink control information; and
a transmitting module, adapted to transmit the downlink control information to the user terminal via the configured localized E-PDCCH resource and the distributed E-PDCCH resource, such that the user terminal detects via a blind detection manner the downlink control information on the localized E-PDCCH resource and the distributed E-PDCCH resource;
wherein the localized E-PDCCH resource comprises resource elements which are continuous in a frequency domain, and the distributed E-PDCCH resource comprises resource elements which are discontinuous in the frequency domain.

13. The base station of claim 12, wherein the configuration module is further adapted to
configure completely overlapped localized E-PDCCH resource and distributed E-PDCCH resource for the user terminal via identical configuration signaling; or
occupy physical resource blocks (PRBs)/PRB pairs in the E-PDCCH cluster via signaling notification or a protocol defined method, and configure partially overlapped localized E-PDCCH resource and distributed E-PDCCH resource for the user terminal; or
configure independent localized E-PDCCH resource and distributed E-PDCCH resource for the user terminal via independent configuration signaling.

14. The base station of claim 13, wherein the configuration module is further adapted to
configure the completely overlapped localized E-PDCCH resource and distributed E-PDCCH resource for the user terminal via one configuration signaling; or
configure the completely overlapped localized E-PDCCH resource and distributed E-PDCCH resource for the user terminal via two identical configuration signaling.

15. The base station of claim 13, wherein the configuration module is further adapted to
indicate, through configuring an offset, a PRB resource in a fixed position in each E-PDCCH cluster of the localized E-PDCCH resource occupied by the distributed E-PDCCH resource, so as to configure the partially overlapped localized E-PDCCH resource and the distributed E-PDCCH resource for the user terminal.

16. The base station of claim 13, wherein the configuration module is further adapted to
notify the user terminal of an initial PRB index of a first cluster via configuration signaling, wherein a frequency domain interval between different clusters is indicated via another signaling or defined by a protocol; or
respectively notify the user terminal of an initial PRB index of each cluster via configuration signaling.

17. The base station of claim 13, wherein the configuration module is further adapted to
if the distributed E-PDCCH resource consists of multiple discontinuous E-PDCCH clusters,
notify the user terminal of an initial PRB index of a first cluster via configuration signaling, wherein a frequency domain interval between different clusters is indicated via another signaling or defined by a protocol; or
respectively notify the user terminal of an initial PRB index of each cluster via configuration signaling.

**18.** The base station of claim 13, wherein the configuration module is further adapted to
if the distributed E-PDCCH resource consists of multiple discontinuous PRBs/PRB pairs,
configure positions of the PRBs occupied by the distributed E-PDCCH resource for the user terminal via configuration signaling; or
configure an initial position of the PRBs and the number of PRBs occupied by the distributed E-PDCCH resource for the user terminal via configuration signaling, wherein the PRB resources corresponding to the distributed E-PDCCH resource are uniformly distributed in the whole downlink system bandwidth.

**19.** The base station of claim 18, wherein the configuration module is further adapted to
configure the initial position of the PRBs and the number of PRBs occupied by the distributed E-PDCCH resource for the user terminal via RRC signaling; or
configure the initial position of the PRBs occupied by the distributed E-PDCCH resource for the user terminal via RRC signaling; wherein the number of PRBs occupied by the control information is relevant to the downlink bandwidth of the system.

**20.** The base station of claim 12, wherein the transmitting module is further adapted to transmit the downlink control information on the E-CCEs included in the E-PDCCH resource;
wherein according to a required coding rate, one downlink control information may be transmitted on multiple E-CCEs.

**21.** A method for transmitting downlink control information, comprising:

receiving, by a user terminal, a localized E-PDCCH resource and a distributed E-PDCCH resource configured by a base station for transmitting downlink control information; and
detecting, by the user terminal, a downlink control information (DCI) format respectively in a search space corresponding to the localized E-PDCCH resource and a search space corresponding to the distributed E-PDCCH resource, and obtaining the downlink control information transmitted by the base station;
wherein the localized E-PDCCH resource comprises resource elements which are continuous in a frequency domain, and the distributed E-PDCCH resource comprises resource elements which are discontinuous in the frequency domain.

**22.** The method of claim 21, wherein
the localized E-PDCCH resource comprises one or more E-PDCCH clusters; and the distributed E-PDCCH resource comprises a plurality of physical resource blocks (PRBs)/PRB pairs which are discontinuous in the frequency domain or comprises discontinuous E-PDCCH clusters.

**23.** The method of claim 22, wherein the receiving the E-PDCCH resource configured by the base station for transmitting the downlink control information comprises:

receiving, by the user terminal, completely overlapped localized E-PDCCH resource and distributed E-PDCCH resource configured by the base station via identical configuration signaling; or
receiving, by the user terminal, PRBs/PRB pair resources in the E-PDCCH cluster occupied by the base station via a signaling notification or a protocol defined method, and receiving partially overlapped localized E-PDCCH resource and distributed E-PDCCH resource configured by the base station; or
receiving, by the user terminal, independent localized E-PDCCH resource and distributed E-PDCCH resource configured by the base station via independent configuration signaling.

**24.** The method of claim 23, wherein the receiving the completely overlapped localized E-PDCCH resource and distributed E-PDCCH resource configured by the base station via identical configuration signaling comprises:

receiving, by the user terminal, the completely overlapped localized E-PDCCH resource and distributed E-PDCCH resource configured by the base station via one configuration signaling; or
receiving, by the user terminal, the completely overlapped localized E-PDCCH resource and distributed E-PDCCH resource configured by the base station via two identical configuration signaling.

**25.** The method of claim 23, wherein the user terminal receiving the PRBs/PRB pair resources in the E-PDCCH cluster occupied by the base station via a signaling notification or a protocol defined method and receiving the partially overlapped localized E-PDCCH resource and distributed E-PDCCH resource comprises:

receiving, by the user terminal, a PRB resource in a fixed position in each E-PDCCH cluster of the localized E-PDCCH resource occupied by the distributed E-PDCCH resource indicated by the base station by configuring an offset, so as to receive the partially overlapped localized E-PDCCH resource and distributed E-PDCCH resource.

26. The method of claim 21, further comprising:

before detecting the DCI format respectively in the search space corresponding to the localized E-PDCCH resource and the search space corresponding to the distributed E-PDCCH resource and obtaining the downlink control information transmitted by the base station,
for the downlink control information transmitted via the localized E-PDCCH resource, determining, by the user terminal, that the search space corresponding to the localized E-PDCCH resource is allocated according to E-PDCCH clusters, wherein an initial position of the search space of each aggregation level of the localized E-PDCCH resource begins on an initial CCE of each E-PDCCH cluster;
for the downlink control information transmitted via the distributed E-PDCCH resource, determining, by the user terminal, that the search space of the distributed E-PDCCH resource is allocated based on all E-CCEs in the distributed E-PDCCH resource.

27. The method of claim 26, wherein the detecting the DCI format respectively in the search space corresponding to the localized E-PDCCH resource and the search space corresponding to the distributed E-PDCCH resource and obtaining the downlink control information transmitted by the base station comprises:

detecting, by the user terminal, the DCI format on at least one E-PDCCH candidate and obtaining the downlink control information transmitted by the base station, wherein E-PDCCH candidates occupy continuous resource elements;
detecting, by the user terminal, the DCI format on at least one E-PDCCH candidate and obtaining the downlink control information transmitted by the base station, wherein E-PDCCH candidates occupy discontinuous resource elements.

28. The method of claim 27, wherein
determining, by the user terminal, a maximum E-PDCCH blind detection number for the search space of the localized E-PDCCH resource and the search space of the distributed E-PDCCH resource.

29. A user terminal, comprising:

a receiving module, adapted to receive a localized E-PDCCH resource and a distributed E-PDCCH resource configured by a base station for transmitting downlink control information; and
a detecting module, adapted to detect a DCI format respectively in a search space corresponding to the localized E-PDCCH resource and a search space corresponding to the distributed E-PDCCH resource, and obtain the downlink control information transmitted by the base station;
wherein the localized E-PDCCH resource comprises resource elements which are continuous in a frequency domain, and the distributed E-PDCCH resource comprises resource elements which are discontinuous in the frequency domain.

30. The user terminal of claim 29, wherein the receiving module is further adapted to
receive completely overlapped localized E-PDCCH resource and distributed E-PDCCH resource configured by the base station via identical configuration signaling; or
receive physical resource blocks (PRBs)/PRB pairs in the E-PDCCH cluster occupied by the base station via signaling notification or a protocol defined method, and receive partially overlapped localized E-PDCCH resource and distributed E-PDCCH resource; or
receive independent localized E-PDCCH resource and distributed E-PDCCH resource configured by the base station via independent configuration signaling.

31. The user terminal of claim 30, wherein the receiving module is further adapted to
receive the completely overlapped localized E-PDCCH resource and distributed E-PDCCH resource configured by the base station via one configuration signaling; or
receive the completely overlapped localized E-PDCCH resource and distributed E-PDCCH resource configured by the base station via two identical configuration signaling.

**32.** The user terminal of claim 30, wherein the receiving module is further adapted to
receive a PRB resource in a fixed position in each E-PDCCH cluster of the localized E-PDCCH resource occupied by the distributed E-PDCCH resource indicated by the base station by an offset, and receive the partially overlapped localized E-PDCCH resource and the distributed E-PDCCH resource.

**33.** The user terminal of claim 29, wherein the receiving module is further adapted to
for the downlink control information transmitted via the localized E-PDCCH resource, determine that the search space of the localized E-PDCCH resource is allocated based on E-PDCCH clusters, wherein an initial position of the search space of each aggregation level begins from an initial CCE of each E-PDCCH cluster;
for the downlink control information transmitted via the distributed E-PDCCH resource, determined that the search space of the distributed E-PDCCH resource is determined according to all E-CCEs of the distributed E-PDCCH.

**34.** The user terminal of claim 33, wherein the detecting module is further adapted to
detect the DCI format on at least one E-PDCCH candidate, obtain the downlink control information transmitted by the base station, wherein E-PDCCH candidates occupy continuous resource elements in the frequency domain;
detect the DCI format in at least one E-PDCCH candidate, obtain the downlink control information transmitted by the base station, wherein E-PDCCH candidates occupy discontinuous resource elements in the frequency domain.

**35.** The user terminal of claim 34, wherein the detecting module is further adapted to determine a maximum E-PDCCH blind detection number for the search space of the localized E-PDCCH resource and the search space of the distributed E-PDCCH resource.

FIG. 1

FIG. 2

FIG. 3

frequency

| | | | | |
|---|---|---|---|---|
| | | | PDSCH | |
| | | RB#n+3 | | |
| P C F I C H | L E G A C Y P D C C H | RB#n+2 | Enhanced PDCCH | |
| | | RB#n+1 | | |
| | | RB#n | | |
| | | | PDSCH | |

←————————————————Subframe————————————————→

time

FIG. 4A

frequency

| | | | |
|---|---|---|---|
| | | | |
| | | RB#D | E-PDCCH part 4 |
| | | | |
| | | RB#C | E-PDCCH part 3 |
| P C F I C H | L E G A C Y P D C C H | | PDSCH |
| | | RB#B | E-PDCCH part 2 |
| | | | |
| | | RB#A | E-PDCCH part 1 |
| | | | |

←————————————————Subframe————————————————→

time

FIG. 4B

The base station configures for a user terminal a localized E-PDCCH resource and a distributed E-PDCCH resource for transmitting downlink control information ⌐ S501

The base station transmits the downlink control information to the user terminal via the localized E-PDCCH resource and the distributed E-PDCCH resource ⌐ S502

FIG. 5

The user terminal receives a localized E-PDCCH resource and a distributed E-PDCCH resource configured by a base station for transmitting downlink control informatino ⌐ S601

The user terminal respectively detects the DCI in the search space corresponding to the localized E-PDCCH resource and the search space corresponding to the distributed E-PDCCH resource and obtains the downlink control information ⌐ S602

FIG. 6

FIG. 7

FIG. 8

FIG. 9

FIG. 10

FIG. 11

| | | | |
|:-:|:-:|:-:|:-:|
| 1 | 1 | 1 | 1 |
| 2 | 2 | 2 | 2 |
| 3 | 3 | 3 | 3 |
| 4 | 4 | 4 | 4 |
| 5 | 5 | 5 | 5 |
| 6 | 6 | 6 | 6 |
| 7 | 7 | 7 | 7 |
| 8 | 8 | 8 | 8 |

Aggregation level 1    Aggregation level 2    Aggregation level 4    Aggregation level 8

FIG. 12

| | | | |
|:-:|:-:|:-:|:-:|
| 1 | 1 | 1 | 1 |
| 2 | 2 | 2 | 2 |
| 3 | 3 | 3 | 3 |
| 4 | 4 | 4 | 4 |
| 5 | 5 | 5 | 5 |
| 6 | 6 | 6 | 6 |
| 7 | 7 | 7 | 7 |
| 8 | 8 | 8 | 8 |
| 9 | 9 | 9 | 9 |
| 10 | 10 | 10 | 10 |
| 11 | 11 | 11 | 11 |
| 12 | 12 | 12 | 12 |
| 13 | 13 | 13 | 13 |
| 14 | 14 | 14 | 14 |
| 15 | 15 | 15 | 15 |
| 16 | 16 | 16 | 16 |

Aggregation level 1    Aggregation level 2    Aggregation level 4    Aggregation level 8

FIG. 13

FIG. 14

FIG. 15

## INTERNATIONAL SEARCH REPORT

| | International application No. |
|---|---|
| | PCT/CN2012/081087 |

### A. CLASSIFICATION OF SUBJECT MATTER

See the extra sheet

According to International Patent Classification (IPC) or to both national classification and IPC

### B. FIELDS SEARCHED

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

CPRSABS, CNTXT, CNKI, VEN: base station, physical downlink control channel/PDCCH, downlink control information/DCI, blind detection, localized, distributed, centralized, frequency field, resources

### C. DOCUMENTS CONSIDERED TO BE RELEVANT

| Category* | Citation of document, with indication, where appropriate, of the relevant passages | Relevant to claim No. |
|---|---|---|
| PX | CN 102395206 A (INST TELECOM SCI&TECHNOLOGY MIN O) 28 Mar. 2012 (28.03.2012) claims 1-35 | 1-35 |
| X | CN102170703A (INST TELECOM SCI&TECHNOLOGY MIN O) 31 Aug. 2011 (31.08.2011) description, paragraphs [0017]-[0062], figures 4-13 | 1-35 |
| A | CN 101883434 A (ZTE CORP.) 10 Nov. 2010 (10.11.2010) the whole document | 1-35 |
| A | CN 101801093 A (ZTE CORP.) 11 Aug. 2010(11.08.2010) the whole document | 1-35 |
| A | CN 102202324 A (INST TELECOM SCI&TECHNOLOGY MIN O) 28 Sep. 2011 (28.09.2011) the whole document | 1-35 |

☒ Further documents are listed in the continuation of Box C.    ☒ See patent family annex.

| | |
|---|---|
| *      Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"document member of the same patent family |

| Date of the actual completion of the international search | Date of mailing of the international search report |
|---|---|
| 26 Nov. 2012(26.11.2012) | 13 Dec. 2012(13.12.2012) |

| Name and mailing address of the ISA | Authorized officer |
|---|---|
| State Intellectual Property Office of the P. R. China No. 6, Xitucheng Road, Jimenqiao Haidian District, Beijing 100088, China | YU, Hongrui |
| Facsimile No. (86-10)62019451 | Telephone No. (86-10)62411490 |

Form PCT/ISA/210 (second sheet) (July 2009)

# INTERNATIONAL SEARCH REPORT

International application No.

PCT/CN2012/081087

C (Continuation). DOCUMENTS CONSIDERED TO BE RELEVANT

| Category* | Citation of document, with indication, where appropriate, of the relevant passages | Relevant to claim No. |
|---|---|---|
| A | US 20110249640 A1 (FutureWei Technologies, Inc.,) 13 Oct. 2011 (13.10.2011)<br><br>the whole document | 1-35 |

Form PCT/ISA /210 (continuation of second sheet ) (July 2009)

## INTERNATIONAL SEARCH REPORT
Information on patent family members

| | International application No. |
|---|---|
| | PCT/CN2012/081087 |

| Patent Documents referred in the Report | Publication Date | Patent Family | Publication Date |
|---|---|---|---|
| CN 102395206 A | 28.03.2012 | None | |
| CN 102170703 A | 31.08.2011 | None | |
| CN 101883434 A | 10.11.2010 | None | |
| CN 101801093 A | 11.08.2010 | WO 2011095069 A1 | 11.08.2011 |
| CN 102202324 A | 28.09.2011 | None | |
| US 20110249640 A1 | 13.10.2011 | WO 2011127404 A2 | 13.10.2011 |
| | | WO 2011127404 A3 | 22.12.2011 |

Form PCT/ISA/210 (patent family annex) (July 2009)

## INTERNATIONAL SEARCH REPORT

International application No.

PCT/CN2012/081087

Continuation of : second sheet

A.   CLASSIFICATION OF SUBJECT MATTER

H04W 72/04 (2009.01) i
H04W 72/12 (2009.01) i

Form PCT/ISA /210 (extra sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• CN 201110351917